# EUROPÄISCHE PATENTSCHRIFT

(11) **EP 1 913 414 B1**
(45) Veröffentlichungstag und Bekanntmachung des Hinweises auf die Patenterteilung: **04.03.2009**
(21) Anmeldenummer: 06763980.7
(22) Anmeldetag: 30.06.2006
(51) Int. Cl.: G01S 7/481, G01C 3/08

(54) **ENTFERNUNGSMESSGERÄT**
DISTANCE MEASURING DEVICE
TELEMETRE

(30) Priorität: 01.08.2005 DE 102005036033
(43) Veröffentlichungstag der Anmeldung: 23.04.2008
(73) Patentinhaber: Robert Bosch GmbH, 70442 Stuttgart (DE)
(72) Erfinder: SKULTETY-BETZ, Uwe, 70771 Leinfelden-Echterdingen (DE); HAASE, Bjoern, 70182 Stuttgart (DE); STIERLE, Joerg, 71111 Waldenbuch (DE); WOLF, Peter, 70771 Leinfelden-Echterdingen (DE); RENZ, Kai, 70771 Leinfelden-Echterdingen (DE)
(86) Internationale Anmeldenummer: PCT/EP2006/063722
(87) Internationale Veröffentlichungsnummer: WO 2007/014812

(56) Entgegenhaltungen:
- EP-A- 0 828 165
- EP-A- 1 566 658
- DE-A1- 10 055 510
- DE-A1- 10 142 166
- DE-A1- 10 344 586
- DE-A1- 19 804 051

## Beschreibung

Die Erfindung geht aus von einem Entfernungsmessgerät zur berührungslosen Abstandsmessung, insbesondere einem Handgerät zur berührungslosen Abstandsmessung, nach dem Oberbegriff des Anspruchs 1.

### Stand der Technik

Mit derartigen gattungsgemäßen Entfernungsmessgeräten wird typischerweise die Entfernung eines angemessenen Objektes von einem Referenzpunkt, an dem das Entfernungsmessgerät mit einem entsprechenden Messanschlag angelegt wird, gemessen. Solche Entfernungsmessgeräte können beispielsweise als Lasermessgerät, als Ultraschallmessgerät oder auch als Hochfrequenz- bzw. Radarmessgerät konzipiert sein. In allen Fällen wird die Entfernung durch direkte bzw. indirekte Messung der Laufzeit eines vom Messgerät ausgesandten modulierten Signals, welches an einem zu vermessenden Objekt reflektiert wird und von dem Messgerät anschließend wieder empfangen wird, bestimmt.

Aus der DE 43 163 48 A1 ist ein Entfernungsmessgerät bekannt, das für unterschiedliche Messaufgaben verwendet werden kann. So kann das Messgerät beispielsweise für den häufig vorkommenden Anwendungsfall einer Messung ausgehend von einer Innenfläche, wie beispielsweise einer Innenwand, eines Bodens oder einer Decke rückseitig, d.h. mit einer objektabgewandten Anschlagfläche an die Referenzfläche angelegt werden. Für den Fall, dass ausgehend von einer Außenkante gemessen werden soll, kann das bekannte Entfernungsmessgerät in Richtung auf das zu vermessende Objekt mit seiner Vorderseite, d.h. mit einer objektzugewandten Anschlagfläche an die Referenzfläche angelegt werden. Bei der Vorrichtung der DE 43 163 48 A1 sind Vorder- und Rückseite des Gerätes parallel zueinander ausgebildet.

Je nach Anwendungsfall wird als geräteseitiger Bezugs- bzw. Nullpunkt der Entfernungsmessung entweder die Vorderseite oder die Rückseite des Entfernungsmessgerätes definiert.

Aus der DE 296 15 514 U1 ist ein elektronisches Abstandsmessgerät mit einem Sender für einen Messstrahl und einen Empfänger für einen zurückkehrenden, reflektierten Strahl, sowie einer Auswerteeinheit zur Ermittlung des Abstandes vom Messgerät zum Reflektionsort bekannt, welches an zwei, sich parallel gegenüber liegenden Flächen seines im wesentlichen quaderförmigen Gehäuses je einen Messspatel aufweist, der vor- und zurückschiebbar am Gehäuse befestigt ist. Die Messspatel, die in Führungen beiderseits am Gerätegehäuse befestigt sind, sind einerseits bis an die Vorderfläche des Gerätes zurückziehbar bzw. in einer anderen stabilen Endstellung um eine genau vorgegebene Strecke ausziebar. Die ausgezogene Position der Messspatel wird automatisch durch in den Führungen dieser Spatel oder in der Gehäusewand des Messgerätes vorhandene Tastschalter festgestellt und einer Auswerteeinheit des elektronischen Abstandsmessgerätes übermittelt.

Aus der DE 100 55 510 A1 ist ein optoelektronisches Laserdistanzmessgerät bekannt, welches auf seiner der Messrichtung abgewandten Gehäuserückseite einen flächigen Messanschlag aufweist, der aus dem Gehäuse heraus geklappt werden kann.

### Vorteile der Erfindung

Das erfindungsgemäße Entfernungsmessgerät mit den Merkmalen des Anspruchs 1 hat den Vorteil, dass ein Messanschlagskörper des Messgerätes derart im Gehäuse gelagert ist, dass der Messanschlagskörper bei Lösung einer Arretierung selbsttätig aus dem Gehäuse heraus und insbesondere aus einer durch die Gehäuserückseite definierten Referenzebene heraus in eine Messposition verfahren wird.

Moderne Entfernungsmessgeräte werden zunehmend kompakter, wobei die Miniaturisierung mittlerweile soweit fortgeschritten ist, dass die manuelle Bedienung von mechanischen Bauteilen des Gehäuses eine gewisse Fingerfertigkeit erfordert.
Bei dem erfindungsgemäßen Entfernungsmessgerät kann ein im Gerät vorgesehener Messanschlag automatisch, beispielsweise auf Knopfdruck, durch Lösung einer Arretierung ausgefahren werden, so dass er selbsttätig seine Messposition einnimmt. Beim Einklappen des Messanschlages verriegelt dieser ebenfalls automatisch und verbleibt dann in seiner Parkposition.

Auf diese Weise ist eine einfache, bedienerfreundliche Handhabung eines Entfernungsmessgerätes und insbesondere des Messanschlages eines solchen Gerätes möglich.

Durch die in den abhängigen Ansprüchen aufgeführten Merkmale sind vorteilhafte Weiterbildungen und Verbesserungen des erfindungsgemäßen Entfernungsmessgerätes möglich.

In einer vorteilhaften Ausführungsform ist der Messanschlagskörper schwenkbar im Gehäuse gelagert und wird bei Lösung seiner Arretierung selbsttätig aus dem Gehäuse heraus, bzw. aus einer am Gehäuse ausgebildeten ersten Referenzebene heraus, in seine Messposition verschwenkt.

In seiner ausgefahrenen bzw. ausgeschwenkten Position, die einer möglichen Messposition des Entfernungsmessgerätes entspricht, steht der Messanschlagskörper im Wesentlichen senkrecht zu einer ersten Referenzebene des Gerätes, die durch die Gehäuserückseite des Entfernungsmessgerätes gebildet wird.

In dieser ausgefahrenen Position definiert der Messanschlagskörper, insbesondere durch seine Spitze, einen Referenzpunkt, der in einer Ebene liegt, die zur ersten Referenzebene parallel ausgebildet ist.

In vorteilhafter Weise ist der Messanschlagskörper des erfindungsgemäßen Entfernungsmessgerätes im wesentlichen stab- bzw. stiftförmig ausgebildet. Dabei ist sein Durchmesser wesentlich kleiner als seine ausgefahrene Länge, sodass durch die Stab- bzw. Stiftform auch die Messung aus Engstellen, wie beispielsweise auch Bohrlöchern heraus, möglich ist.

In vorteilhafter Weise weist der Messanschlagskörper zumindest eine Schwenkachse auf, welche senkrecht zur Messrichtung des Messgerätes ausgebildet ist. Dabei kann die Schwenkachse des Messanschlagskörpers durch einen entfernbaren Achsstift gebildet sein, welcher in vorteilhafter Weise im Gerätegehäuse angeordnet ist. Auf diese Weise ist es möglich, den Messanschlagskörper gegebenenfalls auszuwechseln bzw. zu erneuern.

Das erfindungsgemäße Entfernungsmessgerät weist in einer vorteilhaften Ausführungsform Mittel zu Erfassung einer Position und/oder eines Schwenkwinkels des Messanschlagskörpers auf. Über diese Mittel kann die Elektronik des Messgerätes die aktuelle Position des Messanschlagskörpers detektieren und die dadurch definierte Referenzebene für eine Abstandasmessung an die Auswerteeinheit des Messgerätes übermitteln. Alternativ ist es möglich, auf eine solche automatische Umschaltung zu verzichten und eine Umschaltfunktion vorzusehen, die von einem Anwender beispielsweise in Form einer Funktionstaste bedient werden kann. Die Bezugsebene zur Ermittelung der Distanz kann dann vom Anwender durch eine Taste umgeschaltet werden.

In vorteilhafter Weise weist das erfindungsgemäße Messgerät an der Gehäusevorderseite eine dritte Referenzebene auf, die zur ersten, bzw. zweiten Referenzebene parallel angeordnet ist. Dazu weist die Gehäusevorderseite, welche im wesentlichen gewölbt, d. h. gekrümmt, ausgebildet ist, einen flächigen Teilabschnitt auf, der als Anlagefläche und Referenzebene des erfindungsgemäßen Entfernungsmessgerätes ausgebildet ist.

In vorteilhafter Weise ist der als Anlagefläche dienende, flächige Teilabschnitt der Gehäusevorderseite des erfindungsgemäßen Messgerätes auf der der Messaustrittsöffnung des Gerätegehäuses abgewandten Seite der Gehäusevorderseite ausgebildet. Auf diese Weise wird erreicht, dass an der Gehäusevorderseite eine als Referenzebene dienende Anlagefläche ausgebildet ist, ohne dass ein Anwender bei Verwendung dieser vorderen Referenzfläche Gefahr läuft, die Messsignalaustrittsöffnung durch Anlegen des Messgerätes abzudecken.

Um eine ganz- oder teilweise Abdeckung der Empfangsöffnung im Gehäuse des Messgerätes zu verhindern, weist der als Anlagefläche dienende, ebene Teilabschnitt der Gehäusevorderseite eine im Bereich der Empfangsöffnung ausgebildete Aufnehmung auf, durch die das Messsignal wieder in Das Messgerät eintreten kann.

In vorteilhafter Weise ist das erfindungsgemäße Entfernungsmessgerät als ein optoelektronisches Entfernungsmessgerät und insbesondere als ein Laserentfernungsmesser ausgebildet, der als kompakter, handgehaltener Abstandsmesser, insbesondere im Innenbereich Verwendung finden kann.

Weitere Vorteile des erfindungsgemäßen Messgerätes sind der nachfolgenden Zeichnung sowie in der zugehörigen Beschreibung offenbart.

### Zeichnung

In der Zeichnung ist ein Ausführungsbeispiel eines erfindungsgemäßen Entfernungsmessgerätes dargestellt, das in der nachfolgenden Beschreibung näher erläutert werden soll. Die Figuren der Zeichnung, deren Beschreibung sowie die Ansprüche, enthalten zahlreiche Merkmale in Kombination. Ein Fachmann wird diese Merkmale auch einzeln betrachten und zu neuen, weiteren sinnvollen Kombinationen zusammenfassen.

Es zeigt:
- Figur 1: eine perspektivische Darstellung einer Ausführungsform eines erfindungsgemäßen Entfernungsmessgerätes,
- Figur 2: eine Aufsicht auf das Entfernungsmessgerät gemäß Figur 1,
- Figur 3: eine Detailansicht eines erfindungsgemäßen Entfernungsmessgerätes zur Verdeutlichung eines Ausfühnmgsbeispiels eines Messanschlag körpers, in Ansicht auf die Geräterückseite, bei ausgefahrenem Messanschlagskörper,
- Figur 4: die Detailansicht entsprechend Figur 3 in dazu entgegengesetzter Blickrichtung, und bei eingefahrenem Messanschlagskörper.

### Beschreibung eines Ausführungsbeispiels

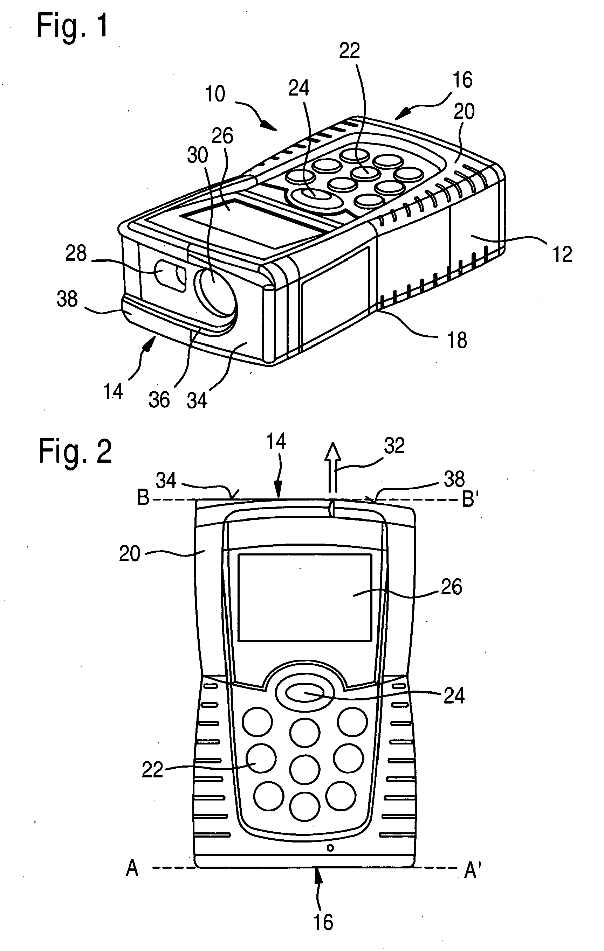

In Figur 1 ist ein Entfernungsmessgerät 10 gezeigt, welches ein Gehäuse 12 mit einer Gehäusevorderseite 14 und einer Gehäuserückseite 16 aufweist. Das Gehäuse 12 ist im wesentlichen quaderförmig ausgebildet und weist jedoch eine deutliche Taille 18 im Bereich der Mitte der Längsausstreckung des Messgerätes auf.

Auf der Oberseite 20 des Gehäuses 12 sind verschiedene Funktionstasten 22 für die Ein- bzw. Ausschaltung und den Abruf verschiedener Messprogramme, sowie eine Messtaste 24 zur Auslösung eines Messvorgangs angeordnet. Darüber hinaus befindet sich an der Oberseite 20 des Messgerätes 10 eine Ausgabeeinheit in Form einer Anzeige 26, mittels der beispielsweise ein ermittelter Messwert sowie zusätzliche Informationen über das ausgewählte Messprogramm angezeigt werden können.

Das Messgerät 10 weist an seiner Gehäusevorderseite 14 eine Austrittsöffnung 28 für die Messstrahlung, beispielsweise einen modulierten Laserstrahl auf. Eine zweite Öffnung 30 bildet sie Eintritisöffnung für das an einem Messobjekt reflektierte Messsignal.

Im Gehäuseinneren befindet sich neben einer Sendeeinheit sowie einer Empfangseinheit für das Messsignal, eine entsprechende Auswerteeinheit, die aus der Laufzeit des Messsignals, insbesondere aus einer vergleichenden Phasenmessung des modulierten Messsignals, die Entfernung des Messgerätes zu einem zu vermessenden Messobjekt bestimmt.

Figur 2 zeigt eine Aufsicht auf die Gehäuseoberseite 20 des Ausführungsbeispiels gemäß Figur 1.

Die Gehäuserückseite 16 bildet eine erste Referenzebene AA' zur Anlage des Messgerätes, beispielsweise an eine Wand. Die durch die Gehäuserückseite 16 gebildete Referenzebene AA' verläuft im Wesentlichen, d.h. bis auf mechanische bzw. herstellungsbedingte Toleranzen, senkrecht zu der durch den Pfeil 32 in Figur 2 gekennzeichnete Messrichtung des Entfernungsmessgerätes.

Die Gehäusevorderseite 14 ist im Wesentlichen gekrümmt ausgebildet und besitzt im Bereich der Messsignaleintrittsöffnung 30 einen ebenen Teilbereich 34, der eine Referenzebene BB' definiert, die parallel zur ersten Referenzebene AA' verläuft. Der ebene Teilbereich 34 der Gehäusevorderseite ist auf der der Messsignalaustrittsöffnung 28 abgekehrten Seite der Messsignaleintrittsöffnung 30 ausgebildet und umgreift letztere zumindest teilweise, wie dies in Figur 1 deutlich zu erkennen ist. Auf diese Weise besitzt der ebene Teilbereich 34 der Gehäusevorderseite eine Ausnehmung 36, durch die das Messsignal in die Messsignaleintrittsöffnung eintreten kann. Mit Hilfe des ebenen Teilbereichs 34 der Gehäusevorderseite kann das Messgerät auch mit seiner Vorderseite 14 an eine Referenzfläche angelegt werden, ohne dass die Gefahr besteht, dass ein Anwender bei dieser Anlage die Messsignalaustrittsöffnung 28 verdeckt. Um einen Anwender davon abzuhalten, das erfindungsgemäße Entfernungsmessgerät im Bereich der Messsignalaustrittsöffnung 28 an eine Referenzfläche, beispielsweise eine Kante anzulegen, besitzt die Gehäusevorderseite 14 im Bereich der Messsignalausirittsöffnung 28 einen gekrümmten Teilbereich 38, so dass in diesem Bereich eine Anlage des Messgerätes parallel zu Messkante nicht möglich ist.

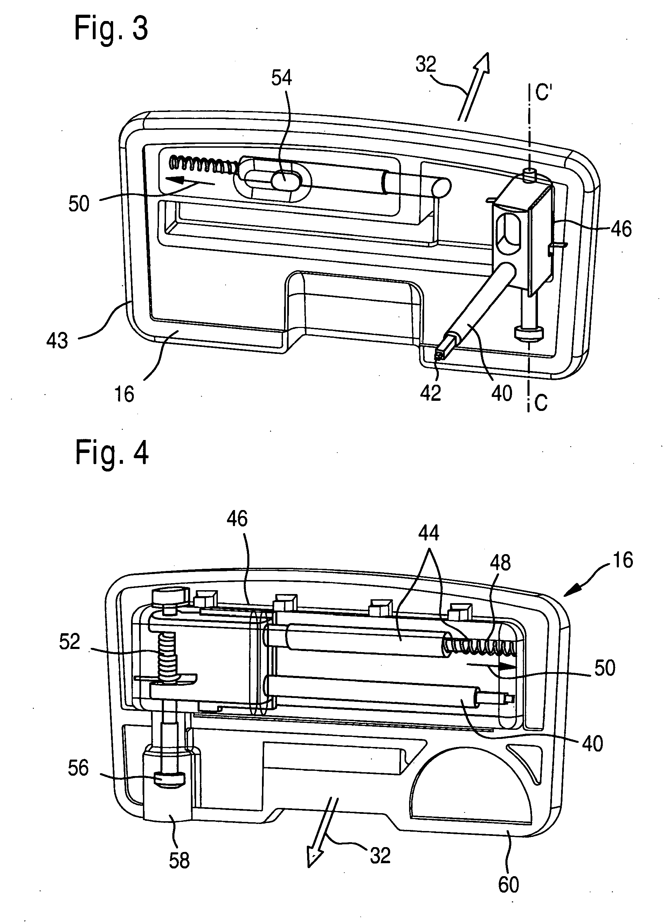

Figur 3 zeigt in einer Ansicht auf die Geräterückseite eine Detaildarstellung der Gehäuserückseite 16 mit einem Messanschlagskörper 40 im ausgefahrenen, bzw. ausgeschwenkten Zustand.

Der Messanschlagskörper 40 ist im Wesentlichen stabförmig bzw. stiftförmig ausgebildet und weist einen als Referenzpunkt dienenden Messanschlag 42 an seinem dem Messgerät abgewandten Ende auf. Der Messanschlagskörper 40 kann insbesondere konisch ausgebildet sein. Dabei ist der Messanschlagskörper derart dimensioniert, dass er auch die Messung aus Engstellen, wie beispielsweise einer Raumecke bzw. auch die Messung aus einem Bohrloch heraus ermöglicht. Dazu kann das erfindungsgemäße Messgerät bei ausgefahrenem Messanschlagskörper mit diesem in das Bohrloch eingesteckt werden.

Der Messanschlagskörper 40 des erfindungsgemäßen Entfernungsmessgerätes ist um eine Achse CC' schwenkbar im Gehäuse des Messgerätes angeordnet. Ebenfalls im rückwärtigen Teil des Gehäuses angeordnet ist ein federgekonteter Arretierbolzen 44, der mit mit seinem einen Ende in eine Arretieröffnung 46 des Messanschlagskörpers 40 eingreifen kann.

Ein vorspringender Rand 43 der Gehäuserückseite 16 bildet die Bezugsebene AA', aus der der Messanschlagskörper im ausgefahrenen Zustand heraustritt. Figur 4 zeigt den erfindungsgemäßen Messanschlagskörper 40 im arretierten Zustand in einer Aufsicht entgegen der Messrichtung 32 des Messgerätes bzw. entgegen der Blickrichtung in Figur 3. In der Darstellung der Figur 4 blickte man sozusagen durch das Gehäuse des Messgerätes hindurch auf die Gehäuserückseite 16.

Der über eine Federelement 48 unter Vorspannung stehende Arretierbolzen 44 steht in der Darstellung der Figur 4 in Eingriff der Arretieröffnung 46 des Messanschlagskörpers 40. Der Messanschlagskörper 40 wird durch den vorgespannten Arretierbolzen 44 in seiner in Figur 4 dargestellten Parkposition gehalten. In dieser Position liegt der gesamte Messanschlagkörper hinter der Referenzebene AA', so dass diese das Ende, bzw. den Abschluss ges Gehäuses des Messgerätes bildet. Wird der Arretierbolzen entgegen der Richtung des Pfeils 50 in Figur 3 bzw. 4 verschoben, so tritt der Arretierbolzen 44 aus der Arretieröffnung 46 aus und eine Schenkelfeder 52 bewirkt ein Ausfahren des Messanschlagskörpers aus der Referenzebene AA' der Gehäuserückseite 16.

Zur Lösung der Arretierung des Messanschlagskörpers 40 kann der Arretierbolzen 44, wie im Ausführungsbeispiel der Figur 3 gezeigt, beispielsweise mechanisch über einen am Bolzen ausgebildeten Dom 54 in Richtung des Pfeils 50 verschoben werden. Alternativerweise ist beispielsweise auch eine automatische, beispielsweise elektromagnetische Anziehung des Arretierbolzens 44 möglich, die über eine Funktionstaste 22 getrieben, mittels eines Elektromagneten realisiert sein kann.

Im Ausführungsbeispiel der Figur 3 bzw. der Figur 4 wird der Messanschlagskörper bei Lösung der Arretierung desselben aus dem Gehäuse heraus derart in seine Messposition verschwenkt, dass der Messanschlag 42 aus der Referenzebene AA' heraustritt. Der Messanschlag 42 liegt damit in einer zweiten Referenzebene, die parallel zu der durch den Rand 43 gebildeten ersten Referenzebene AA' verläuft.

Wird der Messanschlagskörper nun wieder in seine Parkposition im Gehäuse des Messgerätes gebracht, beispielsweise manuell in diese eingedrückt, so rastet der Arretierbolzen 44 durch das Federelement 48 getrieben automatisch wieder in die Arretieröffnung 46 des Messanschlagskörper ein, sodass er Messanschlagskörper im Gehäuse des Messgerätes gesichert ist. Auch hier ist jedoch ein automatischer Einzug des Messanschlagkörpers möglich.

In einer vorteilhaften Ausgestaltung des erfindungsgemäßen Messanschlagskörpers wird die Schwenkachse CC' (siehe Figur 3) gebildet durch eine Spezialschraube, welche eine Kombination von Schraube und Achsstift darstellt. Die Spezialschraube 56 ist durch eine Öffnung 58 auf der Geräteunterseite 60 des Messgerätes zugänglich, sodass beispielsweise auch der Messanschlagskörper 40 ausgewechselt werden kann.

In seiner, in das Gerät hinein gedrehten Parkposition liegt der Messanschlagskörper zwischen der ersten Referenzebene AA' und der zweiten Referenzebene BB' des Messgerätes.

Das erfindungsgemäße Entfernungsmessgerät ist nicht auf das in dem Ausführungs beispiel dargestellte Laserentfernungsmessgerät beschränkt. Bei dem erfindungsgemäßen Entfernungsmessgerät kann es sich ebenso um ein Ultraschallmessgerät oder um ein Hochfrequenzmessgerät, beispielsweise ein Radarentfernungsmessgerät handeln.

Darüber hinaus ist das erfindungsgemäße Entfernungsmessgerät nicht auf einen schwenkbaren Messanschlagskörper beschränkt.

So könnte der Messanschlagskörper mit seinem Messanschlag beispielsweise auch linear aus dem Gehäuse heraus bzw. hinein verschiebbar sein. In diesem Fall würde die Verschiebungsrichtung parallel zur Richtung des Messsignals verlaufen.

## Patentansprüche

1. Entfernungsmessgerät (10) zur berührungslosen Abstandsmessung, insbesondere ein Handgerät, mit einem Gehäuse (12), das eine in Messrichtung (32) weisende Gehäusevorderseite (14) und eine davon abgekehrte Gehäuserückseite (16) aufweist, wobei die Gehäuserückseite (16) eine erste Referenzebene (AA') für die Abstandsmessung bildet, sowie mit einem Messanschlag (42) eines Messanschlagkörpers (40), der aus dem Gehäuse (12) heraus bewegbar ist, **dadurch gekennzeichnet, dass** der Messanschlagkörper (40) derart im Gehäuse gelagert ist, dass dieser bei Lösung einer Arretierung (44,46) selbsttätig aus der ersten Referenzebene (AA') heraus in eine Messposition verfahren wird.

2. Entfernungsmessgerät nach Anspruch 1, **dadurch gekennzeichnet, dass** der Messanschlagkörper (40) schwenkbar im Gehäuse (12) gelagert ist und bei Lösung der Arretierung (44,46) selbsttätig aus der ersten Referenzebene (AA') heraus in seine Messposition verschwenkt wird.

3. Entfernungsmessgerät nach Anspruch 1 oder 2, **dadurch gekennzeichnet, dass** der Messanschlagkörper (40) in seiner ausgefahrenen Position im wesentlichen senkrecht zur ersten Referenzebene (AA') steht.

4. Entfernungsmessgerät nach Anspruch 1, 2 oder 3, **dadurch gekennzeichnet, dass** der Messanschlagkörper (40) in seiner ausgefahrenen Position mit seinem Messanschlag (42) einen Referenzpunkt definiert, der in einer zur ersten Referenzebene (AA') parallelen, zweiten Ebene liegt.

5. Entfernungsmessgerät nach einem der vorhergehenden Ansprüche, **dadurch gekennzeichnet, dass** der Messanschlagskörper (40) im wesentlichen stabförmig ausgebildet ist

6. Entfernungsmessgerät nach zumindest einem der vorhergehenden Ansprüche 2 bis 5, **dadurch gekennzeichnet, dass** der Messanschlagskörper (40) mindestens eine Schwenkachse (CC') senkrecht zur Messrichtung (32) aufweist.

7. Entfernungsmessgerät nach einem der vorhergehenden Ansprüche, **dadurch gekennzeichnet, dass** Mittel zur Erfassung einer Position und/oder eines Schwenkwinkels des Messanschlagkörpers (40) vorgesehen sind.

8. Entfernungsmessgerät nach einem der vorhergehenden Ansprüche, **dadurch gekennzeichnet, dass** die Gehäusevorderseite (14) im gekrümmt ist und einen zur ersten Referenzebene (AA') parallelen, ebenen Teilabschnitt (34) aufweist, der eine dritte Referenzebene definiert.

9. Entfernungsmessgerät nach Anspruch 8, **dadurch gekennzeichnet, dass** der als Anlagefläche dienende, ebene Teilabschnitt (34) auf der einer Messsignalsaustrittsöffnung (28) in der Gehäusevorderseite (14) abgewanden Seite der Gehäusevorderseite (14) ausgebildet ist.

10. Entfernungsmessgerät nach Anspruch 8 oder 9, **dadurch gekennzeichnet, dass** der als Anlagefläche dienende, ebene Teilabschnitt (34) der Gehäusevorderseite (14) eine, im Bereich einer Empfangsöffnung (30) des Gehäuses (12) ausgebildete Ausnehmung (36) aufweist.

11. Entfernungsmessgerät nach einem der vorhergehenden Ansprüche, **dadurch gekennzeichnet, dass** das Messgerät (10) als optoelektronisches Messgerät, insbesondere als ein Laser-Entfernungsmesser ausgebildet ist.

## Claims

1. Distance measuring device (10) for the contactless measurement of distance, in particular a handheld device, having a housing (12) which has a housing front side (14), which points in the measuring direction (32), and a housing rear side (16) which faces away from said front side, the housing rear side (16) forming a first reference plane (AA') for the distance measurement, and having a measurement stop (42) of a measurement stop body (40) which can be moved out of the housing (12), **characterized in that** the measurement stop body (40) is mounted in the housing in such a manner that, when a locking means (44, 46) is released, it is automatically moved out of the first reference plane (AA') into a measuring position.

2. Distance measuring device according to Claim 1, **characterized in that** the measurement stop body (40) is pivotably mounted in the housing (12) and, when the locking means (44, 46) is released, is automatically pivoted out of the first reference plane (AA') into its measuring position.

3. Distance measuring device according to Claim 1 or 2, **characterized in that**, in its extended position, the measurement stop body (40) is essentially perpendicular to the first reference plane (AA').

4. Distance measuring device according to Claim 1, 2 or 3, **characterized in that** the measurement stop (42) of the measurement stop body (40) defines, in the extended position of the latter, a reference point which is on a second plane which is parallel to the first reference plane (AA').

5. Distance measuring device according to one of the preceding claims, **characterized in that** the measurement stop body (40) is essentially in the form of a rod.

6. Distance measuring device according to at least one of the preceding Claims 2 to 5, **characterized in that** the measurement stop body (40) has at least one pivot axis (CC') perpendicular to the measuring direction (32).

7. Distance measuring device according to one of the preceding claims, **characterized in that** means for detecting a position and/or a pivot angle of the measurement stop body (40) are provided.

8. Distance measuring device according to one of the preceding claims, **characterized in that** the housing front side (14) is curved and has a planar section (34) which is parallel to the first reference plane (AA') and defines a third reference plane.

9. Distance measuring device according to Claim 8, **characterized in that** the planar section (34) which is used as a bearing face is formed on that side of the housing front side (14) which faces away from a measurement signal exit opening (28) in the housing front side (14).

10. Distance measuring device according to Claim 8 or 9, **characterized in that** the planar section (34) of the housing front side (14) which is used as a bearing face has a recess (36) which is formed in the region of a receiving opening (30) of the housing (12).

11. Distance measuring device according to one of the preceding claims, **characterized in that** the measuring device (10) is in the form of an optoelectronic measuring device, in particular in the form of a laser distance measuring instrument.

## Revendications

1. Appareil (10) de mesure de distance destiné à des mesures de distance sans contact, en particulier appareil manuel, qui présente
un boîtier (12) doté d'un côté (14) situé en avant du boîtier, tourné dans la direction de mesure (32) et auquel est opposé un côté arrière (16) du boîtier, le côté arrière (16) du boîtier formant un premier plan de référence (AA') pour la mesure de distance,
et une butée de mesure (42) d'un corps (40) de butée de mesure qui peut être déplacé hors du boîtier (12),
**caractérisé en ce que**
le corps (40) de butée de mesure est monté dans le boîtier de telle sorte que lorsqu'un blocage (44, 46) est libéré, il est déplacé automatiquement depuis le premier plan de référence (AA') jusque dans une position de mesure.

2. Appareil de mesure de distance selon la revendication 1, **caractérisé en ce que** le corps (40) de butée de mesure est monté à pivotement dans le boîtier (12) et **en ce qu'**il pivote automatiquement depuis le premier plan de référence (AA') jusque dans sa position de mesure lorsque le blocage (44, 46) est libéré.

3. Appareil de mesure de distance selon les revendications 1 ou 2, **caractérisé en ce que** lorsqu'il est dans sa position déployée, le corps (40) de butée de mesure est situé essentiellement à la perpendiculaire du premier plan de référence (AA').

4. Appareil de mesure de distance selon les revendications 1, 2 ou 3, **caractérisé en ce que** lorsque le corps (40) de butée de mesure est dans sa position déployée, il définit par sa butée de mesure (42) un point de référence situé dans un deuxième plan parallèle au premier plan de référence (AA').

5. Appareil de mesure de distance selon l'une des revendications précédentes, **caractérisé en ce que** le corps (40) de butée de mesure a essentiellement la forme d'un barreau.

6. Appareil de mesure de distance selon au moins l'une des revendications 2 à 5 qui précèdent, **caractérisé en ce que** le corps (40) de butée de mesure présente au moins un axe de pivotement (CC') perpendiculaire à la direction de mesure (32).

7. Appareil de mesure de distance selon l'une des revendications précédentes, **caractérisé en ce qu'**il présente des moyens de détection de la position et/ou de l'angle de pivotement du corps (40) de butée de mesure.

8. Appareil de mesure de distance selon l'une des revendications précédentes, **caractérisé en ce que** le côté avant (14) du boîtier est incurvé et présente une première partie (34) parallèle au premier plan de référence (AA') et définissant un troisième plan de référence.

9. Appareil de mesure de distance selon la revendication 8, **caractérisé en ce que** la partie plane (34) servant de surface de butée est formée sur le côté du côté avant (14) du boîtier qui n'est pas tourné vers une ouverture (28) de sortie de signal de mesure ménagée dans le côté avant (14) du boîtier.

10. Appareil de mesure de distance selon les revendications 8 ou 9, **caractérisé en ce que** la partie plane (34) qui sert de surface de butée du côté avant (14) du boîtier présente une découpe (36) formée dans la zone occupée par l'ouverture de réception (30) du boîtier (12).

11. Appareil de mesure de distance selon l'une des revendications précédentes, **caractérisé en ce que** l'appareil de mesure (10) est configuré comme appareil de mesure optoélectronique et en particulier comme dispositif de mesure de distance par laser.
